# EUROPÄISCHE PATENTSCHRIFT

(11) **EP 3 474 091 B1**
(45) Veröffentlichungstag und Bekanntmachung des Hinweises auf die Patenterteilung: **05.07.2023**
(21) Anmeldenummer: 17020486.1
(22) Anmeldetag: 20.10.2017
(51) Int. Cl.: G05B 13/04

(54) **VERFAHREN UND VORRICHTUNG ZUR REGELUNG EINES PROZESSES INNERHALB EINES SYSTEMS, NÄMLICH EINES MAHLPROZESSES IN EINER MAHLVORRICHTUNG**
METHOD AND DEVICE FOR CONTROLLING A PROCESS WITHIN A SYSTEM, NAMELY OF A MILLING PROCESS IN A MILLING DEVICE
PROCÉDÉ ET DISPOSITIF DE RÉGLAGE D'UN PROCESSUS DANS UN SYSTÈME, A SAVOIR D'UN PROCESSUS DE BROYAGE DANS UN DISPOSITIF DE BROYAGE

(43) Veröffentlichungstag der Anmeldung: 24.04.2019
(73) Patentinhaber: aixprocess GmbH, 52070 Aachen (DE)
(72) Erfinder: Weng, Martin, D-52070 Aachen (DE)
(74) Vertreter: Hohendorf Kierdorf Patentanwälte PartGmbB

(56) Entgegenhaltungen:
- EP-A1- 1 396 770
- DE-A1-102010 062 204

## Beschreibung

Die Erfindung betrifft ein Verfahren zur Regelung eines Prozesses innerhalb eines Systems, nämlich eines Mahlprozesses in einer Mahlvorrichtung. Die Erfindung betrifft ferner eine Vorrichtung zur Ausführung des erfindungsgemäßen Verfahrens.

Bei derartigen Verfahren werden Zustandsvariablen des Systems erfasst, vorzugsweise durch Messen von Prozessgrößen im System. Ferner wird ein Prozessmodell erstellt, welches die Auswirkungen von Stellaktionen auf die Zustandsvariablen des Systems beschreibt, beispielsweise mittels computergestützter neuronaler Netze. Die Regelung des Prozesses innerhalb des Systems erfolgt durch Ausführen von Stellaktionen und unter Berücksichtigung von vorgegebenen Regelungszielen und des erstellten Prozessmodells.

Ferner offenbart die DE 10 2010 062 204 A1 ein Verfahren zum Betrieb einer Mühle mit kontinuierlichen Eingabe- und Ausgabe-Massenströmen, umfassend die folgenden Schritte:
- Verwenden eines Prozessmodells auf der Grundlage von charakteristischen Prozessvariablen aufweisenden Leistungsbilanzgleichungen zur Erfassung eines Mühlenzustands, wobei jeweils eine Veränderung eines Energieinhaltes der Mühlenmasse und deren Inhaltsmassen, einer Differenz aus Energieeinfluss und Energieausfluss entspricht;
- Zusätzliches Verwenden eines Prozessmodells auf der Grundlage von Massenströmen als charakteristische Prozessvariablen aufweisenden Massenbilanzgleichungen zur Erfassung des Mühlenzustands, wobei jeweils eine Veränderung der Inhaltsmassen der Mühle, einer Differenz aus Massenströmen in und Massenstrom aus der Mühle entspricht;
- Außerhalb der Mühle erfolgendes Messen von charakteristischen Prozessvariablen;
- Abschätzen jeweiliger charakteristischer Prozessvariablen mittels Einsetzen der gemessenen Werte in eine jeweilige Leistungsbilanzgleichung unter der Annahme, dass die jeweils anderen Prozessvariablen bekannt oder vernachlässigbar sind; und
- Steuern der Mühle mittels der abgeschätzten charakteristischen Prozessvariablen.

EP 1 396 770 A1 offenbart ein Verfahren zur Regelung eines thermodynamischen Prozesses, bei dem verschiedenen Typen von neuronalen Netzen zur Anwendung kommen.

Der vorliegenden Erfindung liegt die Aufgabe zugrunde die Genauigkeit der bekannten Verfahren zu verbessern.

Die Aufgabe wird erfindungsgemäß gelöst durch ein Verfahren nach Anspruch 1.

Der vorliegenden Erfindung liegt die Erkenntnis zugrunde, dass das Erstellen von mindestens zwei Prozessmodellen (PM), welche jeweils die Auswirkung von Stellaktionen (at) auf die Zustandsvariablen (st) des Systems beschreiben, wobei sich die mindestens zwei Prozessmodelle (PM) in ihrer Struktur voneinander unterscheiden, die Genauigkeit des erfindungsgemäßen Verfahrens zur Regelung eines Prozesses innerhalb eines Systems signifikant verbessert. Ein Prozessmodell (PM) ist dabei ein mathematisches Modell, welches den in dem realen System ablaufenden Prozess abbildet, wobei das Prozessmodell (PM) die Auswirkung von Stellaktionen (at) auf die Zustandsvariablen (st) des Systems beschreibt. Da der in dem realen System ablaufende Prozess durch eine Vielzahl von Einflüssen, wie beispielsweise Stellaktionen (at) oder Störungseinflüsse, beeinflusst wird, kann ein auf einem mathematischen Modell basierendes Prozessmodell (PM) nur für einen bestimmten Bereich von Zustandsvariablen (st) und Auswirkungen von Stellaktionen (at) auf die Zustandsvariablen (st) die in dem realen System laufenden Prozess mit hinreichender Genauigkeit beschreiben. Durch das erfindungsgemäße Erstellen von mindestens zwei Prozessmodellen (PM), wobei sich die mindestens zwei Prozessmodelle (PM) in ihrer Struktur voneinander unterscheiden, wird erfindungsgemäß erreicht, dass für verschiedene Bereiche von Zustandsvariablen (st) und Auswirkungen von Stellaktionen (at) auf die Zustandsvariablen (st) jeweils mindestens ein optimiertes Prozessmodell (PM) zur Regelung des Prozesses innerhalb des Systems zur Verfügung steht. Dabei hat sich erfindungsgemäß herausgestellt, dass der zusätzliche Aufwand für die Erstellung eines mindestens zweiten Prozessmodells (PM) im Vergleich zu der verbesserten Genauigkeit des Verfahrens vernachlässigbar ist.

Erfindungsgemäß werden die Zustandsvariablen (st) mittels Sensoren der Mahlvorrichtung erfasst, nämlich mittels eines Mikrofons und/oder anhand einer automatischen Messung des Ausgangsprodukts. Sollten Zustandsvariablen (st) jedoch nicht direkt mit Sensoren erfasst werden können, so müssen manuell und/oder automatisch entnommene Proben ausgewertet werden und dem erfindungsgemäßen Verfahren zur Verfügung gestellt werden.

Nach einer Variante des erfindungsgemäßen Verfahrens werden die mindestens zwei Prozessmodelle (PM) kontinuierlich durch Auswirkung von Stellaktionen (at) auf die Zustandsvariablen (st) der Mahlvorrichtung angepasst. Da das erfindungsgemäße Verfahren zur Regelung des Prozesses innerhalb des Systems kontinuierlich ausgeführt wird, werden bei dem Erfassen der Zustandsvariablen (st) des Systems die Auswirkungen der vorherigen Stellaktionen (aₜ₋₁) auf die vorherigen Zustandsvariablen (sₜ₋₁) des Systems durch das erfindungsgemäße Verfahren erfasst. Diese erfassten Änderungen der Zustandsvariablen (st) des Systems können dazu genutzt werden, die mindestens zwei Prozessmodelle (PM) kontinuierlich anzupassen, beispielsweise durch Berücksichtigung der Änderung der Zustandsvariablen (st) von den vorherigen Zustandsvariablen (sₜ₋₁) des Systems und die Auswirkungen der Stellaktionen (aₜ₋₁) des vorherigen Zeitpunkts. Somit werden die mindestens zwei Prozessmodelle (PM) kontinuierlich verbessert.

In einer Variante des erfindungsgemäßen Verfahrens werden die mindestens zwei Prozessmodelle (PM) mittels eines Probelaufs des Systems mit zumindest beispielhaftem Ausführen von möglichen Stellaktionen (at) und/oder durch Expertenwissen erstellt. Derartig erstellte Prozessmodelle (PM) können nachfolgend durch die Auswirkungen von Stellaktionen (at) auf die Zustandsvariablen (st) des Systems kontinuierlich angepasst werden, wie zuvor detaillierter ausgeführt. Erfindungsgemäß werden die mindestens zwei Prozessmodelle (PM) jeweils mittels eines computergestützten neuronalen Netzwerks erstellt und kontinuierlich angepasst (trainiert). Das neuronale Netzwerk kann dabei insbesondere mittels an sich bekannter evolutionärer Strategien, genetischer Algorithmen, genetischer Programmierung oder evolutionärer Programmierung trainiert werden, vorzugsweise im Rahmen eines autonomen Auswahl- und/oder Optimierungsprozesses.

Nach einer weiteren Variante des erfindungsgemäßen Verfahrens berücksichtigen die mindestens zwei Prozessmodelle (PM) jeweils mehrere in die Zukunft gerichtete angenommene Auswirkungen von Stellaktionen (aₜ₊₁) auf die Zustandsvariablen (sₜ₊₁) der Mahlvorrichtung. Die mindestens zwei Prozessmodelle (PM) berücksichtigen somit eine Vorhersage von angenommenen Auswirkungen von Stellaktionen (aₜ₊₁) auf die Zustandsvariablen (sₜ₊₁) des Systems.

Die mindestens zwei Prozessmodelle (PM) können folglich zeitlich zurückliegende Auswirkungen von Stellaktionen (aₜ₋₁) auf die Zustandsvariablen (sₜ₋₁) des Systems berücksichtigen, kontinuierlich die Auswirkungen von Stellaktionen (at) auf die Zustandsvariablen (st) des Systems berücksichtigen und ferner eine Vorhersage über in die Zukunft gerichtete angenommene Auswirkung von Stellaktionen (aₜ₊₁) auf die Zustandsvariablen (sₜ₊₁) des Systems erstellen und diese ebenfalls berücksichtigen.

Gemäß einer weiteren Variante des erfindungsgemäßen Verfahrens werden die mindestens zwei Prozessmodelle (PM) unter Berücksichtigung verschiedener Zeitskalen erstellt und/oder optimiert. Somit kann beispielsweise eines der mindestens zwei Prozessmodelle (PM) für kurzfristige Auswirkungen von Stellaktionen (at) auf die Zustandsvariablen (st) des Systems optimiert werden, während das andere der mindestens zwei Prozessmodelle (PM) auf längerfristige Auswirkungen von Stellaktionen (at) auf die Zustandsvariable (st) des Systems optimiert wird. Beim Regeln des Prozesses innerhalb des Systems kann nachfolgend je nach zeitlichem Horizont eines der mindestens zwei Prozessmodelle (PM) berücksichtigt und entsprechende Stellaktionen (at) unter Berücksichtigung von vorgegebenen Regelungszielen ausgeführt werden.

Nach einer weiteren Variante umfasst das erfindungsgemäße Verfahren die Schritte des:
- Erstellen einer Situationsbewertung (SB) mittels Gütefunktionen (ut), welche die Zustandsvariablen (st) im Hinblick auf die Regelungsziele bewertet; und
- Entscheiden ob eine Regelung zum aktuellen Zeitpunkt erforderlich ist um die Zustandsvariablen (st) an die Regelungsziele anzupassen.

Die Situationsbewertung (SB) berücksichtigt mittels der Gütefunktion (ut) die den Stellaktionen (at) zugehörigen Kosten und vergleicht diese mit den aktuellen Zustandsvariablen (st) und den vorgegebenen Regelungszielen. Anhand einer derartigen Situationsbewertung (SB) kann entschieden werden ob eine Regelung zum aktuellen Zeitpunkt erforderlich und/oder sinnvoll ist um die Zustandsvariablen (st) an die Regelungsziele anzupassen oder ob zunächst auf eine Anpassung der Zustandsvariablen (st) an die Regelungsziele mittels Stellaktionen (at) verzichtet werden kann.

In einer Variante des erfindungsgemäßen Verfahrens werden die Auswirkungen von verschiedenen Stellaktionen (at) auf die Zustandsvariablen (st) mehrere Zeitschritte im Voraus berechnet und eine Gesamtgüte (Q) bewertet. Anhand der Gesamtgüte (Q) kann entschieden werden ob eine Regelung zum aktuellen Zeitpunkt erforderlich ist um die Zustandsvariablen (st) an die Regelungsziele anzupassen oder ob zunächst auf eine Anpassung der Zustandsvariablen (st) an die Regelungsziele verzichtet wird. Da die Gesamtgüte (Q) mehrere Zeitschritte im Voraus berücksichtigt, können beispielsweise kurzfristige Änderungen der Zustandsvariablen (st) ausgefiltert werden, da derartige kurzfristige Änderungen der Zustandsvariablen (st) nur einen kleinen Einfluss auf die Gesamtgüte (Q) haben. Somit können unnötige Anpassungen der Zustandsvariablen (st) durch Stellaktionen (at) vermieden werden.

Nach einer zweckmäßigen Variante der Erfindung werden die Gütefunktionen (ut) mittels statistischer Methoden, wie insbesondere künstliche Intelligenz (KI-Ansätze) oder nach den Regeln einer Fuzzy-Logik, aufgestellt.

Gemäß einer besonders zweckmäßigen Variante der Erfindung wird das Verfahren in Echtzeit zur Regelung des Prozesses innerhalb des Systems ausgeführt.

Gemäß einer weiteren zweckmäßigen Variante der Erfindung basiert wenigstens eins, vorzugsweise beide, der mindestens zwei Prozessmodelle (PM) auf der Methode der numerischen Strömungsmechanik (CFD = Computational Fluid Dynamics).

Gemäß dem erfindungsgemäßen Verfahren werden ähnliche Zustandsvariablen (st) des Systems jeweils in einer Gruppe zusammengefasst, wobei für jede Gruppe mindestens ein Prozessmodell (PM) erstellt wird. Die Zusammenfassung von ähnlichen Zustandsvariablen (st) des Systems in Gruppen hat den Vorteil, dass die Anzahl der verschiedenen Prozessmodelle (PM) reduziert wird, wodurch Ressourcen gespart werden. Die Einteilung von ähnlichen Zustandsvariablen (st) des Systems in Gruppen findet selbstlernend und selbstoptimierend statt. Dazu werden Kostenfunktionen berücksichtigt, welche die Kosten einer Eingruppierung von Zustandsvariablen (st) des Systems in eine Gruppe gegenüberstellt zu den Kosten für die Erstellung einer neuen Gruppe.

In einer Variante des erfindungsgemäßen Verfahrens wird eine neue Gruppe und ein neues Prozessmodell (PM) erstellt, wenn Zustandsvariablen (st) des Systems erfasst werden, die bisher in keiner Gruppe eingeordnet sind und/oder welche nicht unter Berücksichtigung der vorgenannten Kostenfunktionen in eine bestehende Gruppe eingeordnet werden können.

Zweckmäßiger Weise wird jeder Gruppe ein eindeutiger Identifizierungscode zugewiesen.

Nach einer Variante des erfindungsgemäßen Verfahrens basieren die mindestens zwei Prozessmodelle (PM) auf evolutionären Strategien, genetischen Algorithmen, genetischer Programmierung oder evolutionärer Programmierung beziehungsweise werden auf dessen trainiert, vorzugsweise im Rahmen eines autonomen Auswahl- und/oder Optimierungsprozesses.

Die Erfindung betrifft ferner eine Vorrichtung, eingerichtet zur Ausführung des erfindungsgemäßen Verfahrens umfassend eine zu regelnde Mahlvorrichtung mit Sensoren zur Erfassung von Zustandsvariablen (st), Stelleneinrichtung zur Ausführung von Stellaktionen (at) und einer mit der Mahlvorrichtung verbundene Steuereinrichtung, vorzugsweise einer Recheneinrichtung.

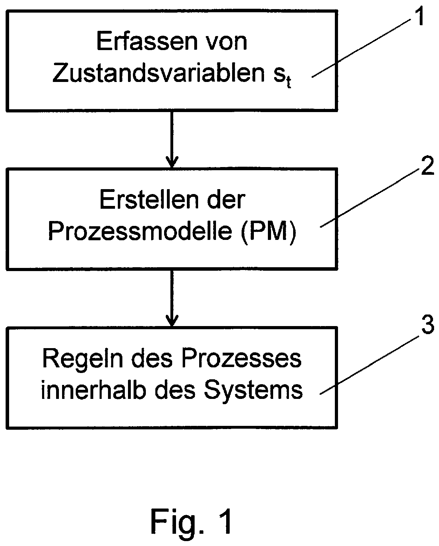

Nachfolgend wird das erfindungsgemäße Verfahren anhand des in der Fig. 1 dargestellten Ausführungsbeispiels näher erläutert.

Es zeigt:
- Fig. 1: den Ablauf eines erfindungsgemäßen Verfahrens zur Regelung eines Prozesses innerhalb eines Systems, insbesondere eines Mahlprozesses in einer Mahlvorrichtung.

In Fig. 1 ist der Ablauf eines erfindungsgemäßen Verfahrens zur Regelung eines Prozesses innerhalb eines Systems, nämlich eines Mahlprozesses in einer Mahlvorrichtung, dargestellt.

In einem ersten Schritt werden die Zustandsvariablen (st) des Systems erfasst 1. Die Zustandsvariablen (st) des Systems werden mittels Sensoren der Mahlvorrichtung oder manuellen und/oder automatischen Probenauswertungen erfasst 1. Bevorzugt ist eine Erfassung 1 der Zustandsvariablen (st) mittels Sensoren, da diese kontinuierlich erfolgen kann. Der Mahlprozess innerhalb einer Mahlvorrichtung wird mittels eines Mikrofons überwacht und/oder anhand einer automatischen Messung des Ausgangsprodukts. Für den Fall, dass Zustandsvariablen nicht direkt mit Sensoren erfasst 1 werden können, so können Proben manuell und/oder automatisch entnommen und ausgewertet werden und das Ergebnis der Auswertung dem erfindungsgemäßen Verfahren zur Verfügung gestellt werden.

Im nächsten Schritt des erfindungsgemäßen Verfahrens werden mindestens zwei Prozessmodelle (PM) erstellt 2, welche jeweils die Auswirkungen von Stellaktionen (at) auf die Zustandsvariablen (st) des Systems beschreiben. Erfindungsgemäß unterscheiden sich die mindestens zwei Prozessmodelle (PM) in ihrer Struktur voneinander.

Die mindestens zwei Prozessmodelle (PM) werden kontinuierlich durch Auswirkungen von Stellaktionen (at) auf die Zustandsvariablen (st) der Mahlvorrichtung angepasst. Dazu werden bei dem erfassen 2 der Zustandsvariablen (st) des Systems die Auswirkungen der vorherigen Stellaktionen (aₜ₋₁) auf die vorherigen Zustandsvariablen (sₜ₋₁) des Systems durch das erfindungsgemäße Verfahren berücksichtigt. Die erfassten Änderungen der Zustandsvariablen (st) des Systems können dazu genutzt werden, die mindestens zwei Prozessmodelle (PM) kontinuierlich anzupassen, beispielsweise durch Berücksichtigung der Änderung der Zustandsvariablen (st) von den vorherigen Zustandsvariablen (sₜ₋₁) des Systems und die Auswirkungen der Stellaktionen (aₜ₋₁) des vorherigen Zeitpunkts.

Die mindestens zwei Prozessmodelle (PM) werden beispielsweise mittels eines Probelaufs des Systems mit zumindest beispielhaftem Ausführen von möglichen Stellaktionen (at) und/oder durch Expertenwissen erstellt.

Die erstellten 2 Prozessmodelle (PM) können nachfolgend durch die Auswirkungen von Stellaktionen (at) auf die Zustandsvariablen (st) des Systems kontinuierlich angepasst werden, wie zuvor näher erläutert.

Die mindestens zwei Prozessmodelle (PM) werden erfindungsgemäß jeweils mittels eines computergestützten neuronalen Netzwerks erstellt und kontinuierlich angepasst (trainiert).

Die neuronalen Netzwerke können dabei insbesondere mittels an sich bekannter evolutionärer Strategien, genetischer Algorithmen, genetischer Programmierung oder evolutionärer Programmierung erstellt und/oder trainiert werden, vorzugsweise im Rahmen eines autonomen Auswahl- und/oder Optimierungsprozesses.

Zur Verbesserung der Genauigkeit des erfindungsgemäßen Verfahrens können die mindestens zwei Prozessmodelle (PM) jeweils mehrere in die Zukunft gerichtete angenommene Auswirkungen von Stellaktionen (aₜ₊₁) auf die Zustandsvariablen (sₜ₊₁) der Mahlvorrichtung berücksichtigen.

Zweckmäßiger Weise berücksichtigen die mindestens zwei Prozessmodelle (PM) folglich zeitlich zurückliegende Auswirkungen von Stellaktionen (aₜ₋₁) auf die Zustandsvariablen (sₜ₋₁) des Systems und aktuelle Auswirkungen von Stellaktionen (st) auf die Zustandsvariablen (st) des Systems und machen ferner eine Vorhersage über in die Zukunft gerichtete angenommene Auswirkungen von Stellaktionen (aₜ₊₁) auf die Zustandsvariablen (sₜ₊₁) des Systems.

Nach einer bevorzugten Variante des erfindungsgemäßen Verfahrens werden die mindestens zwei Prozessmodelle (PM) unter Berücksichtigung verschiedener Zeitskalen erstellt 2 und/oder optimiert. Somit kann beispielsweise eines der mindestens zwei Prozessmodelle (PM) für kurzfristige Auswirkungen von Stellaktionen (at) auf die Zustandsvariablen (st) des Systems optimiert werden, während das andere der mindestens zwei Prozessmodelle (PM) auf längerfristige Auswirkungen von Stellaktionen (at) auf die Zustandsvariablen (st) des Systems optimiert wird.

Erfindungsgemäß werden ähnliche Zustandsvariablen (st) des Systems jeweils in einer Gruppe zusammengefasst, wobei für jede Gruppe mindestens ein Prozessmodell (PM) erstellt wird.

Die Einteilung von ähnlichen Zustandsvariablen (st) des Systems in Gruppen findet selbstlernend und selbstoptimierend statt. Dazu werden Kostenfunktionen berücksichtigt, welche die Kosten einer Eingruppierung von Zustandsvariablen (st) des Systems in eine Gruppe gegenüberstellt zu den Kosten für die Erstellung einer neuen Gruppe.

Beispielsweise wird eine neue Gruppe und ein neues Prozessmodell (PM) erstellt 2, wenn Zustandsvariablen (st) des Systems erfasst werden, die bisher in keiner Gruppe eingeordnet sind und/oder welche nicht unter Berücksichtigung der vorgenannten Kostenfunktionen in eine bestehende Gruppe eingeordnet werden können.

Zweckmäßiger Weise wird jeder Gruppe ein eindeutiger Identifizierungscode zugewiesen.

Im nächsten Schritt des erfindungsgemäßen Verfahrens wird der Prozess innerhalb des Systems durch Ausführen von Stellaktionen (at) unter Berücksichtigung von vorgegebenen Regelungszielen und des Prozessmodels (PM), welches aktuell die beste Vorhersage für den in dem System laufenden Prozess liefert, geregelt 3.

Vorzugsweise wird das erfindungsgemäße Verfahren in Echtzeit zur Regelung des Prozesses innerhalb des Systems ausgeführt. Nach einer besonders zweckmäßigen Variante der Erfindung basieren die mindestens zwei Prozessmodelle (PM) auf der Methode der numerischen Strömungsmechanik (CFD= Computational Fluid Dynamics).

Zweckmäßiger Weise basieren die mindestens zwei Prozessmodelle (PM) ferner auf evolutionären Strategien, genetischen Algorithmen, genetischer Programmierung oder evolutionärer Programmierung beziehungsweise werden auf dessen trainiert, vorzugsweise im Rahmen eines autonomen Auswahl- und/oder Optimierungsprozesses.

Nach einer weiteren Variante umfasst das erfindungsgemäße Verfahren die in Fig. 1 nicht näher dargestellten Schritte des:
- Erstellen einer Situationsbewertung (SB) mittels Gütefunktionen (ut), welche die Zustandsvariablen (st) im Hinblick auf die Regelungsziele bewertet; und
- Entscheiden ob eine Regelung zum aktuellen Zeitpunkt erforderlich ist um die Zustandsvariablen (st) an die Regelungsziele anzupassen.

Die Situationsbewertung (SB) berücksichtigt mittels der Gütefunktion (ut) die den Stellaktionen (at) zugehörigen Kosten und vergleicht diese mit den aktuellen Zustandsvariablen (st) und den vorgegebenen Regelungszielen. Anhand einer derartigen Situationsbewertung (SB) kann entschieden werden ob eine Regelung zum aktuellen Zeitpunkt erforderlich und/oder sinnvoll ist um die Zustandsvariablen (st) an die Regelungsziele anzupassen oder ob zunächst auf eine Anpassung der Zustandsvariablen (st) an die Regelungsziele mittels Stellaktionen (at) verzichtet werden kann.

Zweckmäßiger Weise werden dabei die Auswirkungen von verschiedenen Stellaktionen (at) auf die Zustandsvariablen (st) mehrere Zeitschritte im Voraus berechnet und eine Gesamtgüte (Q) bewertet. Anhand der Gesamtgüte (Q) kann entschieden werden ob eine Regelung zum aktuellen Zeitpunkt erforderlich ist um die Zustandsvariable (st) an die Regelungsziele anzupassen oder ob zunächst auf eine Anpassung der Zustandsvariablen (st) an die Regelungsziele verzichtet werden kann. Da die Gesamtgüte (Q) mehrere Zeitschritte im Voraus berücksichtigt, können beispielsweise kurzfristige Änderungen der Zustandsvariablen (st) ausgefiltert werden, da derartige kurzfristige Änderungen der Zustandsvariablen (st) nur einen kleinen Einfluss auf die Gesamtgüte (Q) haben.

Die Gütefunktion (ut) werden beispielsweise mittels statistischer Methoden, wie insbesondere künstliche Intelligenz (KI-Ansätze) oder nach den Regeln einer Fuzzy-Logik aufgestellt.

### Bezugszeichenliste:

- 1: Erfassen von Zustandsvariablen (st)
- 2: Erstellen der Prozessmodelle (PM)
- 3: Regeln des Prozesses innerhalb des Systems

## Patentansprüche

1. Verfahren zur Regelung eines Prozesses innerhalb eines Systems, nämlich eines Mahlprozesses in einer Mahlvorrichtung, umfassend die folgenden Schritte:
- Erfassen (1) von Zustandsvariablen (st) des Systems mittels Sensoren der Mahlvorrichtung, nämlich eines Mikrofons und/oder anhand einer automatischen Messung des Ausgangsprodukts;
- Erstellen (2) von mindestens zwei Prozessmodellen (PM), welche jeweils mittels eines computergestützten neuronalen Netzwerks erstellt und kontinuierlich angepasst werden und welche jeweils die Auswirkungen von Stellaktionen (aₜ) auf die Zustandsvariablen (sₜ) des Systems beschreiben, wobei sich die mindestens zwei Prozessmodelle (PM) in ihrer Struktur voneinander unterscheiden;
- Regeln (3) des Prozesses innerhalb des Systems durch Ausführen von Stellaktionen (at) unter Berücksichtigung von vorgegebenen Regelungszielen und des Prozessmodells, welches aktuell die beste Vorhersage für den in dem System laufenden Prozess liefert
**dadurch gekennzeichnet, dass**
ähnliche Zustandsvariablen (sₜ) des Systems jeweils in einer Gruppe zusammengefasst werden und wobei für jede Gruppe mindestens ein Prozessmodell (PM) erstellt wird, so dass die Anzahl der verschiedenen Prozessmodelle reduziert wird, wobei die Einteilung von ähnlichen Zustandsvariablen des Systems in Gruppen selbstlernend und selbstoptimierend unter Berücksichtigung von Kostenfunktionen stattfindet, welche die Kosten einer Eingruppierung von Zustandsvariablen des Systems in eine Gruppe gegenüberstellt zu den Kosten für die Erstellung einer neuen Gruppe.

2. Verfahren nach Anspruch 1, wobei die Zustandsvariablen (st) mittels Sensoren der Mahlvorrichtung unter manuellen und/oder automatischen Probenauswertungen erfasst (1) werden.

3. Verfahren nach Anspruch 1 oder Anspruch 2, wobei die mindestens zwei Prozessmodelle (PM) kontinuierlich durch Auswirkungen von Stellaktionen (at) auf die Zustandsvariablen (st) der Mahlvorrichtung angepasst werden.

4. Verfahren nach einem der Ansprüche 1 bis 3, wobei die mindestens zwei Prozessmodelle (PM) mittels eines Probelaufs der Mahlvorrichtung mit einem zumindest beispielhaften Ausführen von Stellaktionen (at) und/oder durch Expertenwissen erstellt (2) werden.

5. Verfahren nach einem der Ansprüche 1 bis 4, wobei die mindestens zwei Prozessmodelle (PM) jeweils mehrere in die Zukunft gerichtete angenommene Auswirkungen von Stellaktionen (aₜ₊₁) auf die Zustandsvariablen (sₜ₊₁) der Mahlvorrichtung berücksichtigen.

6. Verfahren nach einem der Ansprüche 1 bis 5, weiterhin umfassend die Schritte des:
- Erstellen einer Situationsbewertung (SB) mittels Gütefunktionen (ut), welche die Zustandsvariablen (st) im Hinblick auf die Regelungsziele bewertet; und
- Entscheiden ob eine Regelung zum aktuellen Zeitpunkt erforderlich ist um die Zustandsvariablen (st) an die Regelungsziele anzupassen.

7. Verfahren nach Anspruch 6, wobei die Auswirkungen von verschiedenen Stellaktionen (at) auf die Zustandsvariablen (st) mehrere Zeitschritte im Voraus berechnet werden und eine Gesamtgüte (Q) bewertet wird.

8. Verfahren nach Anspruch 116 oder Anspruch 7, wobei die Gütefunktionen (ut) mittels statistischer Methoden, wie insbesondere KI-Ansätze oder nach den Regeln einer Fuzzy-Logik, aufgestellt werden.

9. Verfahren nach einem der Ansprüche 1 bis 8, wobei das Verfahren in Echtzeit zur Regelung des Prozesses innerhalb des Systems ausgeführt wird.

10. Verfahren nach einem der Ansprüche 1 bis 9, wobei wenigstens eins, vorzugsweise beide, der mindestens zwei Prozessmodelle (PM) auf der Methode der numerischen Strömungsmechanik basiert.

11. Verfahren nach einem der Ansprüche 1 bis 10, wobei eine Gruppe und ein neues Prozessmodell erstellt werden, wenn Zustandsvariablen (st) des Systems erfasst werden, die bisher in keiner Gruppe eingeordnet sind.

12. Verfahren nach einem der Ansprüche 1 bis 11, wobei die mindestens zwei Prozessmodelle (PM) auf evolutionären Strategien, genetischen Algorithmen, genetischer Programmierung oder evolutionärer Programmierung basieren beziehungsweise auf Basis dessen trainiert werden, vorzugsweise im Rahmen eines autonomen Auswahl- und/oder Optimierungsprozesses.

13. Vorrichtung, eingerichtet zur Ausführung des Verfahrens gemäß einem der Ansprüche 1 bis 12, umfassend eine zu regelnde Mahlvorrichtung mit Sensoren zur Erfassung von Zustandsvariablen (st), Stelleinrichtungen zur Ausführung von Stellaktionen (at) und einer mit der Mahlvorrichtung verbundenen Steuereinrichtung, vorzugsweise einer Recheneinrichtung.

## Claims

1. Method for controlling a process within a system, namely a grinding process in a grinding device, comprising the following steps:
- detecting (1) state variables (sₜ) of the system by sensors of the grinding device, namely a microphone and/or by means of an automatic measuring of the output product;
- creating (2) at least two process models (PM), which each are created and continuously adapted by a computer based neural network, which each describe the effects of actuating actions (aₜ) on the state variables (sₜ) of the system, the structure of the at least two process models (PM) differing from one another;
- controlling (3) of the process within the system by executing actuating actions (aₜ) under consideration of predefined control objectives and the process model, which currently provides the best prediction for the process running in the system,
**characterized in that**
similar state variables (sₜ) of the system are grouped together and wherein at least one process model (PM) is created for each group, so that the number of different process models is reduced, whereby the classification of similar state variables of the system into groups takes place in a self-learning and self-optimising manner, taking into account cost functions which compare the costs of a grouping of state variables of the system into a group to the costs of creating a new group.

2. Method according to claim 1, wherein the state variables (sₜ) are detected (1) by means of sensors of the grinding device or manual and/or automatic sample evaluations.

3. Method according to claim 1 or claim 2, wherein the at least two process models (PM) are continuously adapted by the effects of actuating actions (aₜ) on the state variables (sₜ) of the grinding device.

4. Method according to one of the claims 1 to 3, wherein the at least two process models (PM) are created (2) by means of a test run of the grinding device with at least an exemplary execution of actuating actions (aₜ) and/or by expert knowledge.

5. Method according to one of the claims 1 to 4, wherein the at least two process models (PM) each take into account several assumed future effects of actuating actions (aₜ₊₁) on the state variables (sₜ₊₁) of the grinding device.

6. Method according to one of the claims 1 to 5, further comprising the steps of:
- creating a situation assessment (SB) by means of quality functions (uₜ), which assesses the state variables (sₜ) with respect to the control objectives; and
- deciding whether a control is required at the current time to adapt the state variables (sₜ) to the control objectives.

7. Method according to claim 6, wherein the effects of different actuating actions (aₜ) on the state variables (sₜ) are calculated several time steps in advance and an overall quality (Q) is evaluated.

8. Method according to claim 6 or claim 7, wherein the quality functions (uₜ) are established by means of statistical methods, such as in particular KI approaches or according to the rules of a fuzzy logic.

9. Method according to any of claims 1 to 8, where the method is performed in real time to control the process within the system.

10. Method according to any of claims 1 to 9, wherein at least one, preferably both, of said at least two process models (PM) is based on the method of numerical fluid mechanics.

11. Method according to any of claims 1 to 10, wherein a new group and new process model are created, if state variables (sₜ) of the system are detected, which have not been classified to a group.

12. Method according to any of claims 1 to 11, wherein the at least two process models (PM) are based on evolutionary strategies, genetic algorithms, genetic programming or evolutionary programming, respectively, trained on the basis thereof, preferably in the context of an autonomous selection and/or optimization process.

13. Device set up for carrying out the method according to any one of claims 1 to 12, comprising a grinding device to be controlled with sensors for detecting state variables (sₜ), actuating devices for carrying out actuating actions (aₜ) and a control device connected to the grinding device, preferably a computing device.

## Revendications

1. Procédé de contrôle d'un processus à l'intérieur d'un système, à savoir un processus de meulage dans un dispositif de meulage, comprenant les étapes suivantes :
- la détection (1) de variables d'état (st) du système par des capteurs du dispositif de meulage, à savoir un microphone et/ou au moyen d'une mesure automatique du produit de sortie ;
- la création (2) d'au moins deux modèles de processus (PM), qui sont chacun créés et adaptés en continu par un réseau neuronal informatique, qui décrivent chacun les effets des actions d'actionnement (at) sur les variables d'état (st) du système, la structure des deux modèles de processus (PM), ou plus, différant l'une de l'autre ;
- le contrôle (3) du processus à l'intérieur du système par l'exécution des actions d'actionnement (at) en tenant compte d'objectifs de contrôle prédéfinis et du modèle de processus, qui fournit actuellement la meilleure prédiction pour le processus s'exécutant dans le système,
**caractérisé en ce que**
des variables d'état similaires (st) du système sont regroupées ensemble et au moins un modèle de processus (PM) étant créé pour chaque groupe, de sorte que le nombre de modèles de processus différents est réduit, la classification de variables d'état similaires du système en groupes se produit ainsi d'une manière à auto-apprentissage et auto-optimisation, en prenant en compte des fonctions de coûts qui comparent les coûts d'un groupement des variables d'état du système dans un groupe aux coûts de création d'un nouveau groupe.

2. Procédé selon la revendication 1, les variables d'état (st) étant détectées (1) au moyen de capteurs du dispositif de meulage ou d'évaluations manuelles et/ou automatiques d'échantillons.

3. Procédé selon la revendication 1 ou la revendication 2, les deux modèles de processus (PM), ou plus, étant adaptés en continu par les effets des actions d'actionnement (at) sur les variables d'état (st) du dispositif de meulage.

4. Procédé selon l'une des revendications 1 à 3, les deux modèles de processus (PM), ou plus, étant créés (2) au moyen d'un essai de fonctionnement du dispositif de meulage avec au moins une exécution donnée à titre d'exemple d'actions d'actionnement (at) et/ou par connaissance d'expert.

5. Procédé selon l'une des revendications 1 à 4, les deux modèles de processus (PM), ou plus, prenant chacun en compte plusieurs effets futurs supposés d'actions d'actionnement (aₜ₊₁) sur les variables d'état (sₜ₊₁) du dispositif de meulage.

6. Procédé selon l'une des revendications 1 à 5, comprenant en outre les étapes suivantes :
- la création d'une évaluation de situation (SB) au moyen de fonctions de qualité (ut), qui évalue les variables d'état (st) par rapport aux objectifs de contrôle ; et
- le fait de décider si un contrôle est requis au moment actuel pour adapter les variables d'état (st) aux objectifs de contrôle.

7. Procédé selon la revendication 6, les effets des différentes actions d'actionnement (at) sur les variables d'état (st) étant calculés plusieurs étapes temporelles à l'avance et une qualité globale (Q) étant évaluée.

8. Procédé selon la revendication 6 ou la revendication 7, les fonctions de qualité (ut) étant établies au moyen de procédés statistiques, tels qu'en particulier des approches KI et en fonction des règles d'une logique floue.

9. Procédé selon l'une quelconque des revendications 1 à 8, le procédé étant exécuté en temps réel pour contrôler le processus à l'intérieur du système.

10. Procédé selon l'une quelconque des revendications 1 à 9, au moins un, de préférence les deux, desdits au moins deux modèles de processus (PM), ou plus, étant basés sur le procédé de mécanique des fluides numériques.

11. Procédé selon l'une quelconque des revendications 1 à 10, un nouveau groupe et un nouveau modèle de processus étant créés, si des variables d'état (st) du système sont détectées, qui n'ont pas été classifiées dans un groupe.

12. Procédé selon l'une quelconque des revendications 1 à 11, les deux modèles de processus (PM), ou plus, étant basés sur des stratégies évolutives, des algorithmes génétiques, une programmation génétique ou une programmation évolutive, respectivement, entraînés sur la base de ceux-ci, de préférence dans le contexte d'un processus d'optimisation et/ou de sélection autonome.

13. Dispositif conçu pour la mise en oeuvre du procédé selon l'une quelconque des revendications 1 à 12, comprenant un dispositif de meulage devant être contrôlé par des capteurs permettant de détecter des variables d'état (st), d'actionner des dispositifs pour la mise en oeuvre des actions d'actionnement (at) et un dispositif de contrôle connecté au dispositif de meulage, de préférence un dispositif informatique.
